(19) Europäisches Patentamt / European Patent Office / Office européen des brevets

(11) **EP 4 223 711 B1**

(12) **EUROPEAN PATENT SPECIFICATION**

(45) Date of publication and mention
of the grant of the patent:
**15.10.2025 Bulletin 2025/42**

(21) Application number: **21875232.7**

(22) Date of filing: **16.09.2021**

(51) International Patent Classification (IPC):
**C03B 20/00** *(2006.01)* **C03C 3/06** *(2006.01)*
**C03C 4/02** *(2006.01)* **C03C 14/00** *(2006.01)*

(52) Cooperative Patent Classification (CPC):
**C03B 19/066; C03C 3/06; C03C 4/02;**
**C03C 14/004; C04B 35/14;** C03C 2201/02;
C04B 2235/428; C04B 2235/5409;
C04B 2235/5436; C04B 2235/5463;
C04B 2235/608; C04B 2235/6567;
C04B 2235/6583; C04B 2235/72; C04B 2235/728;
(Cont.)

(86) International application number:
**PCT/JP2021/034015**

(87) International publication number:
**WO 2022/070930 (07.04.2022 Gazette 2022/14)**

(54) **BLACK QUARTZ GLASS AND METHOD FOR MANUFACTURING SAME**

SCHWARZES QUARZGLAS UND VERFAHREN ZUR HERSTELLUNG DAVON

VERRE DE QUARTZ NOIR, ET PROCÉDÉ DE FABRICATION DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2020 JP 2020166634
09.09.2021 JP 2021146783**

(43) Date of publication of application:
**09.08.2023 Bulletin 2023/32**

(73) Proprietor: **TOSOH SGM CORPORATION
Yamaguchi 746-0006 (JP)**

(72) Inventors:
• **KUNIYOSHI, Minoru**
**Shunan-shi, Yamaguchi 746-0006 (JP)**
• **SAKURAI, Manabu**
**Shunan-shi, Yamaguchi 746-0006 (JP)**

(74) Representative: **Merli, Silvia
Marchi & Partners S.r.l.
Via Vittor Pisani, 13
20124 Milano (IT)**

(56) References cited:
WO-A1-2004/050570    JP-A- 2001 316 174
JP-A- 2019 502 641    JP-A- 2020 073 440
JP-A- 2020 073 440    JP-A- H02 283 015

**(Cont. next page)**

(52)  Cooperative Patent Classification (CPC): (Cont.)
      C04B 2235/77; C04B 2235/9607; C04B 2235/9646;
      C04B 2235/9653; C04B 2235/9661

**Description**

TECHNICAL FIELD

The present invention relates to a black quartz glass and a method for producing the same. More specifically, the present invention relates to a black quartz glass which can be used for a quartz glass cell for optical analysis and used for a light-shielding member, an infrared heat absorption/storage member or the like for semiconductor manufacturing apparatuses or for infrared heating apparatuses, and to a producing method to efficiently obtain the black quartz glass. Furthermore, the invention relates to a product made of the black quartz glass according to the invention.

CROSS REFERENCE TO RELATED APPLICATIONS

This application claims priority to Japanese Patent Application No. 2020-166634, filed on October 1, 2020, and Japanese Patent Application No. 2021-146783, filed on September 9, 2021.

BACKGROUND ART

The quartz glass is used in various applications such as lighting equipments, optical equipment components, semiconductor industrial members, and physicochemical equipments by taking advantage of its good light transmittance in the range from ultraviolet to infrared, low thermal expansion, and chemical resistance. In this situation, a black glass, in which a small amount of transition metal oxide is added to the quartz glass, is used for a portion where local light-shielding is required, and is used for optical equipment components, such as quartz glass cells for optical analysis, by bonding with a transparent quartz glass by thermocompression bonding or the like. However, in recent years, miniaturization and thinning of components have been advancing, and the conventional black glass sometimes lacks the light-shielding property, and thus there is a need for the black quartz glass having a higher light-shielding property, that can be easily bonded to the transparent quartz glass.

In addition, the quartz glass has some other advantages, such as a high heat resistance and a high chemical purity, and is also widely used in tools for semiconductor manufacturing and other applications. However, in recent years, a heating loss has become a problem in a heat treatment step of semiconductor manufacturing processes, and in a heating process with an infrared light, there is a need for the shielding member against infrared irradiation to parts other than the target object to be heated and for the infrared heat absorption/storage member for efficient heating of the target object. Therefore, there is a demand for the development of the black quartz glass that effectively shields infrared rays, that has an excellent infrared heat absorption/storage property, and that is capable of producing large members without metallic impurities that cause process contamination.

Conventionally, the following black glasses containing silica as a main component are known.

For example, Patent Literature 1 proposes a method for producing the black quartz glass by mixing a quartz glass powder and niobium pentachloride, converting the niobium pentachloride to niobium pentoxide, and then heating to 1800°C or more to reduce and melt.

Patent Literature 2 proposes producing the black quartz glass containing carbon derived from a volatile organosilicon compound, which was obtained by subjecting a silica porous glass to a gas phase reaction with the organosilicon compound that can serve as a carbon source, and then heating and sintering at a temperature of 1200°C or more and 2000°C or less.

Patent Literature 3 proposes producing the black quartz glass as a composite material having a fused silica matrix in which regions of Si in elemental form are embedded, by wet-mixing a fused silica powder obtained from pulverization of melted quartz glass and a silicon-containing powder, molding by a casting method and drying, and then heating the obtained molded body at a sintering temperature below the melting temperature of silicon, 1350 to 1435°C.

Patent Literature 4 proposes a colored glass sintered body in which carbon is dispersed as colored particles having a volume ratio of 0.1% to 30% in the matrix of the glass sintered body.

Patent Literature 1: JP-A-2014-94864
Patent Literature 2: JP-A-2013-1628
Patent Literature 3: JP-A-2020-73440
Patent Literature 4: JP-A-2003-146676

SUMMARY OF INVENTION

TECHNICAL PROBLEM

However, in the black quartz glass described in Patent Literature 1, a color uniformity is not sufficient when the size is enlarged, a temperature of 1800°C or more is required for producing, furnace materials and heaters need to be made of high-grade materials, and simultaneously a great deal of energy is required for heating, resulting in a productivity problem. In addition, it is difficult to apply it to the semiconductor manufacturing field since the niobium compound contained therein may cause contamination in a step of using it.

The black quartz glass described in Patent Literature 2 also has the problem in color uniformity, and it is difficult to enlarge the size. In producing, there is also a problem in productivity due to a complicated structure of furnace and a cumbersome operation for a need for non-oxidizing atmosphere. It is also difficult to enlarge the size in terms of the structure of furnace. In addition, it is difficult to apply it to the semiconductor manufacturing field since carbon contained therein may be generated as particles in a step of using it and cause contamination.

The black quartz glass of a kind described in Patent Literature 3 also may have insufficient color uniformity when it is enlarged. Furthermore, there is a problem in enlargement due to limitation of the casting molding. Moreover, the operations of casting and drying are complicated and a long time for producing, and the heating at a temperature of 1350°C or more is required in sintering and therefore furnace materials and heaters need to be made of high-grade materials, and simultaneously a great deal of energy is required for heating, resulting in a productivity problem.

The black quartz glass of a kind described in Patent Literature 4 also may have insufficient color uniformity when it is enlarged, and further has a problem that the risk of breakage in sintering molded bodies is increased when the size is enlarged and thus a large black quartz glass cannot be obtained. In addition, it is difficult to apply it to the semiconductor manufacturing field since carbon may be generated as particles in a step of using it and cause contamination.

An object of the present invention is to provide a black quartz glass which has an excellent light-shielding property, has no risk of causing contamination in a step of using it, has sufficient color uniformity when the size is enlarged, and is capable of producing a large ingot.

Another object of the present invention is to provide a method for producing the black quartz glass, which achieves the object above, with an excellent productivity even in the large ingot.

A further object of the present invention is to provide a black quartz glass product manufactured from the black quartz glass, such as an optical component, e.g. a spectroscopic cell, or a light-shielding member or an infrared heat absorption/storage member for semiconductor manufacturing apparatuses.

SOLUTION TO PROBLEM

The present inventors had made intensive studies to solve the problems above, and as a result, they found that a black quartz glass which substantially contains no metallic impurities other than Si and O and has no risk of causing contamination in a step of using it can be obtained in a system where fine particles of Si and SiO are dispersed in a quartz glass at a specific concentration, and further that this black quartz glass has an excellent light-shielding property, a sufficient color uniformity in an enlarged size, and a high productivity, and thus they had completed the present invention.

The present invention is as follows.

[1] A black quartz glass comprising Si of 0.5 to 10 mass%, SiO of 0.1 to 5 mass% and $SiO_2$ of the residue (hereinafter referred to as quartz glass), wherein the SCE reflectance at a wavelength of 350 nm to 750 nm is 10% or less.

[2] The black quartz glass according to [1], wherein the brightness L* is 30 or less, the absolute value of the saturation a* is 3.5 or less, and the absolute value of b* is 4 or less in L*a*b* color system.

[3] The black quartz glass according to [1] or [2], wherein each content of metallic impurities other than Si element is 1 ppm or less.

[4] The black quartz glass according to any one of [1] to [3], which satisfies any one or more of the following physical properties (a) to (f):

(a) the density is 2.15 g/cm$^3$ or more and 2.3 g/cm$^3$ or less,
(b) the specific heat at a temperature of 500°C is 1090 J/kg·K or more and 1130 J/kg·K or less,
(c) the thermal diffusivity at a temperature of 500°C is $7 \times 10^{-7}$ m$^2$/s or more and $8 \times 10^{-7}$ m$^2$/s or less,
(d) the thermal conductivity at a temperature of 500°C is 1.5 W/mK or more and 2.1 W/mK or less,
(e) the thermal expansion coefficient in the range of 30°C to 600°C is $2 \times 10^{-7}$ /°C or more and $12 \times 10^{-7}$ /°C or less,
(f) the optical transmittance at a wavelength of 200 nm to 3000 nm with a thickness of 1 mm is 0.5% or less.

[5] The black quartz glass according to any one of [1] to [4], wherein at least a part of Si contained in the quartz glass is particulate, and the particulate substance has $D_{50}$ of 5 to 10 $\mu$m, $D_{10}$ of 1 $\mu$m or more and $D_{95}$ of 30 $\mu$m or less in the diameter.

[6] The black quartz glass according to any one of [1] to [5], wherein at least a part of SiO contained in the quartz glass is particulate, and the particulate substance has $D_{50}$ of 5 to 15 $\mu$m, $D_{10}$ of 1 $\mu$m or more and $D_{90}$ of 35 $\mu$m or less in the diameter.

[7] The black quartz glass according to any one of [1] to [6], wherein

(a) the $SiO_2$ part is a sintered body of fumed silica; or
(b) the $SiO_2$ part is a sintered body comprising fumed silica of 30 to 60 mass% and a synthetic silica powder of the residue having $D_{50}$ of 60 to 100 $\mu$m, $D_{10}$ of 40 $\mu$m or more and $D_{95}$ of 180 $\mu$m or less in the particle diameter; or
(c) the $SiO_2$ part is a sintered body comprising fumed silica of 30 to 60 mass%, spherical silica of 5 to 25 mass% having $D_{50}$ of 5 to 15 $\mu$m, $D_{10}$ of 1 $\mu$m or more and $D_{95}$ of 70 $\mu$m or less, and a synthetic silica powder of the residue having $D_{50}$ of 60 to 100 $\mu$m, $D_{10}$ of 40 $\mu$m or more and $D_{95}$ of 180 $\mu$m or less in the particle diameter.

[8] A method for producing black quartz glass, comprising:

(1) pressure-molding a powder obtained by mixing and consolidating fumed silica with a Si powder of 0.5 to 10 mass% and a SiO powder of 0.1 to 5 mass%, and heating the pressure-molded product in the atmosphere at a maximum temperature of 1200 to 1300°C and sintering the fumed silica to obtain the black quartz glass according to any one of [1] to [6] or the black quartz glass according to (a) of [7]; or
(2) pressure-molding a powder obtained by mixing and consolidating fumed silica of 30 to 60 mass% and a synthetic silica powder of the residue having $D_{50}$ of 60 to 100 $\mu$m, $D_{10}$ of 40 $\mu$m or more and $D_{95}$ of 180 $\mu$m or less in the particle diameter, with a Si powder of 0.5 to 10 mass% and a SiO powder of 0.1 to 5 mass%, and heating and sintering the pressure-molded product in the atmosphere at a maximum temperature of 1250 to 1320°C to obtain the black quartz glass according to any one of [1] to [6] or the black quartz glass according to (b) of [7]; or
(3) pressure-molding a powder obtained by mixing and consolidating fumed silica of 30 to 60 mass%, spherical silica of 5 to 25 mass% having $D_{50}$ of 5 to 15 $\mu$m, $D_{10}$ of 1 $\mu$m or more and $D_{95}$ of 70 $\mu$m or less, and a synthetic silica powder of the residue having $D_{50}$ of 60 to 100 $\mu$m, $D_{10}$ of 40 $\mu$m or more and $D_{95}$ of 180 $\mu$m or less in the particle diameter, with a Si powder of 0.5 to 10 mass% and a SiO powder of 0.1 to 5 mass%, and heating and sintering the pressure-molded product in the atmosphere at a maximum temperature of 1250 to 1320°C to obtain the black quartz glass according to any one of [1] to [6] or the black quartz glass according to (c) of [7].

[9] The method for producing black quartz glass according to [8], wherein the fumed silica satisfies at least one of: the tapped bulk density is 0.03 to 0.08 g/cm$^3$, the BET specific surface area is 50 to 100 m$^2$/g, the OH group-concentration is 0.5 to 1.0 mass%, and each content of metallic impurities other than Si of 1 ppm or less.

[10] The method for producing black quartz glass according to [8] or [9], wherein the Si powder has $D_{50}$ of 5 to 10 $\mu$m, $D_{10}$ of 1 $\mu$m or more and $D_{95}$ of 30 $\mu$m or less in the particle diameter, and the SiO powder has $D_{50}$ of 3 to 15 $\mu$m, $D_{10}$ of 1 $\mu$m or more and $D_{90}$ of 35 $\mu$m or less in the particle diameter.

[11] The method for producing black quartz glass according to any one of [8] to [10], wherein the mixing and consolidation are performed so that the tapped bulk density of the powder obtained by the mixing and consolidation is 5 to 20 times the tapped bulk density of the fumed silica.

[12] The method for producing black quartz glass according to any one of [8] to [11], wherein the heating and sintering time in the atmosphere is 0.5 to 5 hours.

[13] A product comprising a black quartz glass member made of the black quartz glass according to any one of [1] to [7].

[14] The product according to [13], wherein the black quartz glass member is an optical component, a light-shielding member or an infrared heat absorption/storage member.

[15] The product according to [14], wherein the optical component is a spectroscopic cell, a reflector for projectors or a connector for optical fibers, and the light-shielding member is a light-shielding member for semiconductor manufacturing apparatuses or for infrared heating apparatuses.

ADVANTAGOUS EFFECT OF INVENTION

The present invention allows to provide a black quartz glass which has an excellent light-shielding property, has sufficient color uniformity when the size is enlarged, is obtained with good productivity, and has no risk of causing contamination in a step of using it. Furthermore, the present invention allows to provide a method for producing the black quartz glass with a high productivity by means of a heating step at a relatively low temperature. In addition, the black quartz glass of the present invention with the excellent light-shielding property is suitably utilized for the quartz glass cell for optical analysis and utilized for the light-shielding member or the infrared heat absorption/storage member for semiconductor manufacturing apparatuses or for infrared heating apparatuses.

EMBODIMENTS OF INVENTION

<Black quartz glass>

The black quartz glass of the present invention will be described.

The black quartz glass of the present invention is a quartz glass comprising Si of 0.5 to 10 mass%, SiO of 0.1 to 5 mass% and $SiO_2$ of the residue. At least a part of Si is an elementary substance consisting of a plurality of Si atoms, and at least a part of Si is present in the quartz glass as a particulate substance consisting of the elementary substance Si. The SiO means silicon monoxide, and at least a part of SiO is present in the quartz glass as a particulate substance consisting of SiO.

When Si is less than 0.5 mass% and SiO is less than 0.1 mass%, the brightness L* becomes large and undesirable, and the SCE reflectance also becomes large and undesirable. When Si is more than 10 mass% and SiO is more than 5 mass%, a sintering of the raw material is inhibited during the preparation, causing a reduction in the mechanical strength of the quartz glass of the present invention, which is the sintered body. The Si is preferably 0.5 to 5 mass%, more preferably 0.5 to 3 mass%. The SiO is preferably 0.2 to 2 mass%, more preferably 0.3 to 2 mass%, and the residue is $SiO_2$.

The black quartz glass of the present invention has an SCE reflectance at a wavelength of 350 nm to 750 nm of 10% or less. The SCE reflectance at a wavelength of 350 nm to 750 nm is measured in accordance with JIS Z 8722. When the SCE reflectance is 10% or less, an excellent light-shielding property is exhibited. The SCE reflectance is preferably lower, preferably 9% or less, and more preferably 8% or less in terms of excellent light-shielding property. The lower limit of the SCE reflectance is not particularly limited, but may be 1%.

In the black quartz glass of the present invention, the brightness L* in L*a*b* color system is preferably 30 or less. When the brightness L* is 30 or less, not only color unevenness does not generate, but also a black-based color can be sufficiently exhibited not to generate light transmission, stray light and light scattering. Furthermore, regarding the black quartz glass of the present invention, the absolute value of the saturation a* is preferably 3.5 or less and the absolute value of b* is preferably 4 or less in L*a*b* color system. When the brightness L* and the saturation a* and b* are within the ranges above, the color tone of the black quartz glass of the present invention becomes blacker, and the black quartz glass has a lower SCE reflectance. Preferably, the brightness L* is 28 or less, and the absolute value of the saturation a* is 2.8 or less and the absolute value of b* is 3.7 or less, in terms of a blacker color tone.

In the black quartz glass of the present invention, each content of metallic impurities other than Si element is preferably 1 ppm or less. When the content of metallic impurities other than Si element is more than 1 ppm, there is a risk of causing process contamination during semiconductor manufacturing or the like. Furthermore, in a field of optical analysis or the like, there is a risk of causing an adverse effect on accuracy due to fluorescent generation or the like. The contents of metallic impurities other than Si element can be analyzed by an atomic absorption analysis method or the like.

The black quartz glass of the present invention has a density in the range of 2.15 to 2.3 $g/cm^3$. The density is almost the same as the theoretical density in a case of adding Si and SiO to the transparent quartz glass. The density is preferably in the range of 2.17 to 2.27 $g/cm^3$, more preferably in the range of 2.18 to 2.25 $g/cm^3$.

In the black quartz glass of the present invention, the specific heat at a temperature of 500°C may be 1090 J/kg·K or more and 1130 J/kg·K or less. The specific heat at a temperature of 500°C can be measured by a differential scanning calorimetry (DSC method). The specific heat is preferably in the range of 1095 J/kg·K or more and 1120 J/kg·K or less, more preferably in the range of 1100 J/kg·K or more and 1114 J/kg·K or less.

The black quartz glass of the present invention may have a thermal diffusivity of $7 \times 10^{-7}$ $m^2/s$ or more and $8 \times 10^{-7}$ $m^2/s$ or less at a temperature of 500°C. The thermal diffusivity at a temperature of 500°C can be measured according to JIS R 1611 by means of the flush method. The thermal diffusivity is preferably in the range of $7.2 \times 10^{-7}$ $m^2/s$ or more and $7.9 \times 10^{-7}$ $m^2/s$ or less, more preferably in the range of $7.4 \times 10^{-7}$ $m^2/s$ or more and $7.6 \times 10^{-7}$ $m^2/s$ or less.

The black quartz glass of the present invention may have a thermal conductivity of 1.5 W/mK or more and 2.1 W/mK or less at a temperature of 500°C. Thermal conductivity at a temperature of 500°C can be calculated by multiplying the density of the sintered body by the specific heat and the thermal diffusivity. The thermal conductivity is preferably in the range of 1.6 W/mK or more and 2.0 W/mK or less, more preferably in the range of 1.7 W/mK or more and 1.9 W/mK or less.

The black quartz glass of the present invention may have a thermal expansion coefficient of $2 \times 10^{-7}$ /°C or more and $12 \times 10^{-7}$ /°C or less at a temperature of 30°C to 600°C. Thermal expansion coefficient at a temperature of 30°C to 600°C can be measured by a thermomechanical analysis (TMA method). The thermal expansion coefficient is preferably in the range of $4 \times 10^{-7}$ /°C or more and $11 \times 10^{-7}$ /°C or less, more preferably in the range of $6 \times 10^{-7}$ /°C or more and $10 \times 10^{-7}$ /°C or less.

The black quartz glass of the present invention may have an optical transmittance at a wavelength of 200 nm to 3000 nm with a thickness of 1 mm of 0.5% or less. The optical transmittance at a wavelength of 200 nm to 3000 nm is measured with a spectrophotometer. The optical transmittance of 0.5% or less allows to exhibit the excellent light-shielding property. The optical transmittance is preferably low in terms of excellent light-shielding property, and preferably 0.4% or less, and more preferably 0.3% or less. The lower limit of the optical transmittance is not particularly limited, but may be 0.01%.

The black quartz glass of the present invention contains Si as a particulate substance, and the Si particulate substance has, for example, $D_{50}$ of 5 to 10 $\mu$m, $D_{10}$ of 1 $\mu$m or more and $D_{95}$ of 30 $\mu$m or less in the particle diameter. The black quartz glass of the present invention contains SiO as a particulate substance, and the SiO particulate substance has, for example, $D_{50}$ of 3 to 15 $\mu$m, $D_{10}$ of 1 $\mu$m or more and $D_{90}$ of 35 $\mu$m or less in the particle diameter. When the Si particulate substance has $D_{50}$ of 5 $\mu$m or more in the particle diameter and the SiO particulate substance has $D_{50}$ of 3 $\mu$m or more in the particle diameter, the absolute values of saturations a* and b* become small, and the color tone becomes blacker, leading to preferable. When the Si particulate substance has $D_{50}$ of 10 $\mu$m or less in the particle diameter and the SiO particulate substance has $D_{50}$ of 15 $\mu$m or less in the particle diameter, there is a tendency that the brightness L* and the SCE reflectance become the predetermined values or less, that the black quartz glass having the excellent light-shielding property is obtained, that the raw material silica is easily sintered during the preparation of the black quartz glass, and that the black quartz glass is obtained as a sintered body with an excellent mechanical strength. When the Si particulate substance has $D_{10}$ of 1 $\mu$m or more in the particle diameter and the SiO particulate substance has $D_{10}$ of 1 $\mu$m or more in the particle diameter, the absolute values of saturations a* and b* tend to become small, leading to preferable. When the Si particulate substance has $D_{50}$ of 10 $\mu$m or less in the particle diameter and the SiO particulate substance has $D_{50}$ of 15 $\mu$m or less in the particle diameter, there is a tendency that the sintering of the raw material silica progresses well during the preparation of the black quartz glass, and that the black quartz glass is obtained as a sintered body with an excellent mechanical strength.

The black quartz glass of the present invention is produced using fumed silica as a sintering material, as described later. The fumed silica is a fine powder of silica obtained by burning silicon tetrachloride gas or the like in a gas phase. Since the particle diameter of the fumed silica is as small as 10 to 30 nm, generally the bulk density is very low, it is unsuitable for granulation and forming, and the sintered body obtained by sintering it usually has a small density, so it is not satisfactory for the quartz glass. However, the present invention surprisingly allows to obtain a quartz glass which has a density nearly equal to a theoretical density of quartz glass to which Si and SiO are added, by means of sintering (1) fumed silica, or (2) a mixed powder of fumed silica and a synthetic silica powder, or (3) a mixed powder of fumed silica, a synthetic silica powder and spherical silica, in which particulate substances of Si and SiO are dispersed at a particular concentration. Moreover, the obtained quartz glass is a black quartz glass having a SCE reflectance of 10% or less. As will be described later, the fumed silica used as a raw material preferably has a tapped bulk density of 0.03 to 0.08 g/cm$^3$, a BET specific surface area of 50 to 100 m$^2$/g, a OH group-concentration of 0.5 to 1.0 mass%, and/or each content of metallic impurities other than Si element of 1 ppm or less, in terms of being able to obtain the quartz glass having a density nearly equal to a theoretical density of quartz glass to which Si and SiO are added and to produce the black quartz glass also satisfying properties such as the SCE reflectance, even in a large ingot.

<Method for Producing Black Quartz Glass>

A method for producing the black quartz glass of the present invention will be described. A method for producing the black quartz glass of the present invention comprises pressure-molding a powder obtained by mixing and consolidating (1) fumed silica, or (2) a mixture powder of fumed silica and a synthetic silica powder, or (3) a mixture powder of fumed silica, spherical silica and a synthetic silica powder, with a Si powder of 0.5 to 10 mass% and a SiO powder of 0.1 to 5 mass%, and heating the pressure-molded product in the atmosphere to sinter the fumed silica. The maximum temperature for this heating is in the range of 1200 to 1300°C for (1) and in the range of 1250°C to 1320°C for (2) and (3). This producing method allows to obtain the black quartz glass of the present invention.

The synthetic silica powder is a high-purity powdery silica obtained by hydrolyzing a chemically purified silicon alkoxide, drying, pulverizing and sintering. The spherical silica powder is a high-purity synthetic fused spherical silica obtained by reacting a silicon tetrachloride gas or the like in a gas phase. The microstructure of the sintered body can be made more homogeneous, and the heating time up to the maximum temperature can be shortened, by adding the synthetic silica powder or the synthetic silica powder and the spherical silica to the fumed silica.

In the producing method of the present invention, (1) the fumed silica, or (2) the fumed silica and the synthetic silica powder, or (3) the fumed silica, the synthetic silica powder and the spherical silica powder are coexisted with a predetermined amount of the Si powder and the SiO powder, and Si particles and SiO particles are mixed homogeneously, substantially without aggregation, into the powder in a dry state of (1) the fumed silica, or (2) the fumed silica and the synthetic silica powder, or (3) the fumed silica, the synthetic silica powder and the spherical silica powder. During this mixing, a consolidation proceeds concurrently with the mixing, and then the powder for pressure-molding can be obtained. Herein, the operation of the consolidation proceeding concurrently with the mixing is defined as a mixing and consolidation.

In order to obtain the powder for pressure-molding by the mixing and consolidation, it is preferable to use 0.5 to 10 mass% of the Si powder having $D_{50}$ of 5 to 10 $\mu$m, $D_{10}$ of 1 $\mu$m or more and $D_{95}$ of 30 $\mu$m or less in the particle diameter, and 0.1 to 5 mass% of the SiO powder having $D_{50}$ of 3 to 15 $\mu$m, $D_{10}$ of 1 $\mu$m or more and $D_{90}$ of 35 $\mu$m or less in the particle diameter. In addition, in order to obtain the powder for pressure-molding by the mixing and consolidation, it is preferable to use the fumed silica having a tapped bulk density of 0.03 to 0.08 g/cm$^3$, a BET specific surface area of 50 to 100 m$^2$/g, an OH group-concentration of 0.5 to 1.0 mass% and each content of metallic impurities other than Si of 1 ppm or less, the synthetic silica powder having $D_{50}$ of 60 to 100 $\mu$m, $D_{10}$ of 40 $\mu$m or more and $D_{95}$ of 180 $\mu$m or less in the particle diameter, and the spherical silica having $D_{50}$ of 5 to 15 $\mu$m, $D_{10}$ of 1 $\mu$m or more and $D_{95}$ of 70 $\mu$m or less in the particle diameter. The use of these fumed silica, synthetic silica powder and spherical silica is preferable also in terms of obtaining the quartz glass with the density nearly equal to the theoretical density of the quartz glass to which Si and SiO are added.

Furthermore, it is also preferable to use the synthetic silica powder having $D_{50}$ of 60 to 100 $\mu$m, $D_{10}$ of 40 $\mu$m or more and $D_{95}$ of 180 $\mu$m or less in the particle diameter, and the spherical silica having $D_{50}$ of 5 to 15 $\mu$m, $D_{10}$ of 1 $\mu$m or more and $D_{95}$ of 70 $\mu$m or less in the particle diameter, in terms of making the microstructure of the sintered body more homogeneous and shortening the heating time up to the maximum temperature during sintering. Moreover, when the raw material silica is the fumed silica and the synthetic silica powder, it is preferable that the fumed silica is 30 to 60 mass% and the residue is the synthetic silica powder, in terms of making the microstructure of the sintered body more homogeneous and shortening the heating time up to the maximum temperature during sintering. In addition, when the raw material silica is the fumed silica, the synthetic silica powder and the spherical silica powder, it is preferable that the fumed silica is 30 to 60 mass%, the spherical silica is 5 to 25 mass% and the residue is the synthetic silica powder, in terms of making the microstructure of the sintered body more homogeneous and shortening the heating time up to the maximum temperature during sintering.

Fumed silica is generally unsuitable for sintering. However, when the powder for pressure-molding, which is obtained by the mixing and consolidation in that way, is pressure-molded and heated at a maximum temperature of 1200 to 1320°C in the atmosphere, the density of the obtained sintered body can reach almost theoretical density, and the black quartz glass having properties including an excellent SCE reflectance can be obtained.

The mixing and consolidation are preferably performed so that the tapped bulk density of the powder obtained by consolidating is 5 to 20 times the tapped bulk density of the fumed silica. When the tapped bulk density of the powder for pressure-molding is 5 times or more the tapped bulk density of the fumed silica, the density of the sintered body tends to increase. When the tapped bulk density of the powder for pressure-molding is 20 times or less the tapped bulk density of the fumed silica, the strength of the molded body is not reduced. The tapped bulk density of the powder for pressure-molding is preferably in the range of 6 to 15 times, more preferably 7 to 10 times, the tapped bulk density of the fumed silica. The mixing and consolidation can be performed using common mixing devices such as stirring mixers, ball mills, rocking mixers, cross mixers, V type mixers, or the like.

The mixed and consolidated powder can be formed into a desired shape. A dry method such as a die press molding, a cold isostatic pressing method, or the like, which is usually used for forming ceramics, can be used as the molding method. The pressing force is suitably 10 to 300 MPa, for example. When it is 10 MPa or more, the molded body does not break down, and the yield during molding can be maintained. When it is 300 MP or less, the productivity is good and the production cost is reduced without requiring a large-scale facility, leading to desirable.

When the raw material silica is the fumed silica, the sintering is performed at a maximum sintering temperature of 1200 to 1300°C, preferably 1240 to 1260°C in the atmosphere. More preferably, it is performed at 1240 to 1250°C. When the sintering temperature exceeds 1300°C, there is a tendency that the brightness L* increases and the SCE reflectance increases as well. When the sintering temperature is less than 1200°C, there is a tendency that a sintered body having good density and bending strength cannot be obtained.

When the raw material silica is the fumed silica and the synthetic silica powder, the sintering is performed at a maximum sintering temperature of 1250 to 1320°C, preferably 1280 to 1310°C in the atmosphere. More preferably, it is performed at 1290 to 1300°C. When the sintering temperature exceeds 1320°C, there is a tendency that the brightness L* increases and the SCE reflectance increases as well. When the sintering temperature is less than 1250°C, there is a tendency that a sintered body having good density and bending strength cannot be obtained.

When the raw material silica is the fumed silica, the synthetic silica powder and the spherical silica powder, the sintering is performed at a maximum sintering temperature of 1250 to 1320°C, preferably 1280 to 1310°C in the atmosphere. More preferably, it is performed at 1290 to 1300°C. When the sintering temperature exceeds 1320°C, there is a tendency that the brightness L* increases and the SCE reflectance increases as well. When the sintering temperature is less than 1250°C, there is a tendency that a sintered body having good density and bending strength cannot be obtained.

In any of the heating and sintering steps, the sintering time at the maximum temperature in an atmospheric furnace may be, for example, in the range of 0.5 to 5 hours. However, it can be appropriately adjusted in consideration of physical properties of the sintered body. When the sintering time is short, the density and the bending strength tend to decrease. When the sintering time is too long, the productivity decreases, and the production costs increase.

A product of black quartz glass can be obtained by processing an ingot of the black quartz glass obtained through the above-described steps using a processing machine, which is used for producing quartz members, such as a band saw, a wire saw, or a core drill.

The black quartz glass thus obtained has no color unevenness, and exhibits a sufficient black-based color that does not generate light transmission, stray light and light scattering, and is useful in the entire field of optics. Furthermore, it is suitable for fabricating an optical analysis cell made of the quartz glass due to not only having an extremely high light-shielding performance but also being able to bond with the transparent quartz glass.

The present invention encompasses a product including a black quartz glass member made of the black quartz glass of the present invention. The black quartz glass of the present invention has a lower thermal expansion coefficient than that of a quartz glass under operating environments where a dimensional accuracy is required at a high temperature, and other thermal properties are also equivalent to those of the quartz glass. Therefore, the black quartz glass member of the present invention is useful, for example, as the optical component, the light-shielding member, or the infrared heat absorption/storage member. The optical component is, for example, a spectroscopic cell, a reflector for projectors or a connector for optical fibers, and the light-shielding member is, for example, a light-shielding member for semiconductor manufacturing apparatuses or for infrared heating apparatuses. However, the present invention is not intended to be limited to these members.

The black quartz glass of the present invention does not contain metallic impurities, and is particularly suitable for a member of a heat treatment apparatus used for semiconductor manufacturing. For example, in the wafer heat treatment apparatus, when a portion other than the surface for transmitting infrared rays for heating is constituted by the black quartz glass of the present invention, the heat radiated to the outside of the furnace can be efficiently shield, and it is possible to improve the energy efficiency and uniformity of the temperature distribution in the furnace.

EXAMPLES

Hereinafter, the present invention will be described in detail with Examples, but the present invention is not limited to the Examples.

Sample characteristics were measured as follows.

(1) The density of the sintered body was measured by the Archimedes method.

(2) The SCE reflectance was measured for samples processed into a thickness of 7 mm, with a spectrocolorimeter, according to JIS Z 8722. The highest value in the wavelength range of 360 to 740 nm range is described.

(3) The brightness L* and the saturation a*, b* in L*a*b* color system were measured with a spectrocolorimeter, according to JIS Z 8722.

(4) The specific heat was measured by a differential scanning calorimetry (DSC method) at a temperature of 500°C for samples processed into $\varphi 6 \times 1$ mmt.

(5) Thermal diffusivity was measured by a flushing method at a temperature of 500°C for samples processed into $\varphi 10 \times 1$ mmt, according to JISR1611.

(6) The thermal conductivity was calculated by the following equation under the condition of a temperature of 500°C.

$$\text{Thermal conductivity} = \text{specific heat} \times \text{thermal diffusivity} \times \text{density of sintered body}$$

(7) The thermal expansion coefficient was measured by thermomechanical analysis (TMA method) at 30 to 600°C for samples processed into $3 \times 4 \times 20$ mmL.

(8) The optical transmittance was measured using a spectrophotometer in the range of 200 to 3000 nm for samples processed into a thickness of 1 mm.

[Example 1]

To fumed silica was added with a Si powder of 2.0 mass% and a SiO powder of 0.5 mass%, wherein the fumed silica had the tapped bulk density of 0.06 g/cm$^3$, the BET specific surface area of 85 m$^2$/g, the OH group-concentration of 0.7 mass% and each content of metallic impurities other than Si of 1 ppm or less, the Si powder had $D_{50}$ of 7 $\mu$m, $D_{10}$ of 4 $\mu$m and $D_{95}$ of 11 $\mu$m in the particle diameter, and the SiO powder had $D_{50}$ of 10 $\mu$m, $D_{10}$ of 5 $\mu$m and $D_{90}$ of 20 $\mu$m in the particle diameter, and then the mixing and consolidation were performed in a ball mill without solvents. The obtained powder for pressure-molding with the tapped bulk density of 0.45 g/cm$^3$ was pressure-molded in 90 Mpa, and sintered in the atmosphere at 1250°C for 3 hours.

The obtained black quartz glass had the density of 2.20 g/cm$^3$, the SCE reflectance of 5.3% or less, the brightness L* of 20.6 and the saturation a* of 1.9 and b* of -0.6 in L*a*b* color system, the specific heat at a temperature of 500°C is 1103 J/kg·K, the thermal diffusivity at a temperature of 500°C is $7.5 \times 10^{-7}$ m$^2$/s, the thermal conductivity at a temperature of 500°C is 1.82 W/mK, the thermal expansion coefficient at a temperature of 30 to 600°C is $9.4 \times 10^{-7}$ /°C, and the optical transmittance in the range of 200 to 3000 nm of 0.12% or less. The obtained black quartz glass has no color unevenness, and exhibits a sufficient black-based color that does not generate light transmission, stray light and light scattering, and was confirmed to be visually homogeneous and aesthetically excellent.

[Example 2]

To fumed silica was added with a Si powder of 1.0 mass% and a SiO powder of 1.0 mass%, wherein the fumed silica had the tapped bulk density of 0.06 g/cm$^3$, the BET specific surface area of 85 m$^2$/g, the OH group-concentration of 0.7 mass% and each content of metallic impurities other than Si of 1 ppm or less, the Si powder had $D_{50}$ of 8 $\mu$m, $D_{10}$ of 3 $\mu$m and $D_{95}$ of 20 $\mu$m in the particle diameter, and the SiO powder had $D_{50}$ of 10 $\mu$m, $D_{10}$ of 5 $\mu$m and $D_{90}$ of 20 $\mu$m in the particle diameter, and then the mixing and consolidation were performed in a ball mill without solvents. The obtained powder for pressure-molding with the tapped bulk density of 0.45 g/cm$^3$ was pressure-molded in 90 Mpa, and sintered in the atmosphere at 1250°C for 3 hours.

The obtained black quartz glass had the density of 2.19 g/cm$^3$, the SCE reflectance of 7.6% or less, the brightness L* of 25.2 and the saturation a* of 2.6 and b* of 3.3 in L*a*b* color system, the specific heat at a temperature of 500°C of 1108 J/kg·K, the thermal diffusivity at a temperature of 500°C of 7.5 × 10$^{-7}$ m$^2$/s, the thermal conductivity at a temperature of 500°C of 1.83 W/mK, the thermal expansion coefficient at a temperature of 30 to 600°C of 8.3 × 10$^{-7}$ /°C, and the optical transmittance in the range of 200 to 3000 nm of 0.17% or less. The obtained black quartz glass has no color unevenness, and exhibits a sufficient black-based color that does not generate light transmission, stray light and light scattering, and was confirmed to be visually homogeneous and aesthetically excellent.

[Example 3]

To a silica mixed powder comprising fumed silica of 50 mass% and a synthetic silica powder of 50 mass% was added with a Si powder of 2.0 mass% and a SiO powder of 0.5 mass%, wherein the fumed silica had the tapped bulk density of 0.06 g/cm$^3$, the BET specific surface area of 85 m$^2$/g, the OH group-concentration of 0.7 mass% and each content of metallic impurities other than Si of 1 ppm or less, the synthetic silica powder had $D_{50}$ of 80 $\mu$m, $D_{10}$ of 48 $\mu$m, $D_{95}$ of 160 $\mu$m in the particle diameter and each content of metallic impurities other than Si of 1 ppm or less, the Si powder had $D_{50}$ of 6 $\mu$m, $D_{10}$ of 4 $\mu$m and $D_{95}$ of 10 $\mu$m in the particle diameter, and the SiO powder had $D_{50}$ of 10 $\mu$m, $D_{10}$ of 5 $\mu$m and $D_{90}$ of 20 $\mu$m in the particle diameter, and then the mixing and consolidation were performed in a ball mill without solvents. The obtained powder for pressure-molding with the tapped bulk density of 0.60 g/cm$^3$ was pressure-molded in 90 Mpa, and sintered in the atmosphere at 1300°C for 3 hours.

The obtained black quartz glass had the density of 2.20 g/cm$^3$, the SCE reflectance of 5.3% or less, the brightness L* of 18.2 and the saturation a* of 3.2 and b* of 2.1 in L*a*b* color system, the specific heat at a temperature of 500°C of 1105 J/kg·K, the thermal diffusivity at a temperature of 500°C of 7.5 × 10$^{-7}$ m$^2$/s, the thermal conductivity at a temperature of 500°C of 1.81 W/mK, the thermal expansion coefficient at a temperature of 30 to 600°C of 9.0 × 10$^{-7}$ /°C, and the optical transmittance in the range of 200 to 3000 nm of 0.14% or less. The obtained black quartz glass has no color unevenness, and exhibits a sufficient black-based color that does not generate light transmission, stray light and light scattering, and was confirmed to be visually homogeneous and aesthetically excellent.

[Example 4]

To a silica mixed powder comprising fumed silica of 40 mass%, a synthetic silica powder of 42 mass% and spherical silica of 18 mass% was added with a Si powder of 1.0 mass% and a SiO powder of 0.5 mass%, wherein the fumed silica had the tapped bulk density of 0.06 g/cm$^3$, the BET specific surface area of 85 m$^2$/g, the OH group-concentration of 0.7 mass% and each content of metallic impurities other than Si of 1 ppm or less, the synthetic silica powder had $D_{50}$ of 80 $\mu$m, $D_{10}$ of 48 $\mu$m, $D_{95}$ of 160 $\mu$m in the particle diameter and each content of metallic impurities other than Si of 1 ppm or less, the spherical silica had $D_{50}$ of 11 $\mu$m, $D_{10}$ of 3 $\mu$m, $D_{95}$ of 52 $\mu$m in the particle diameter and each content of metallic impurities other than Si of 1 ppm or less, the Si powder had $D_{50}$ of 6 $\mu$m, $D_{10}$ of 3 $\mu$m and $D_{95}$ of 13 $\mu$m in the particle diameter, and the SiO powder had $D_{50}$ of 5 $\mu$m, $D_{10}$ of 2 $\mu$m and $D_{90}$ of 9 $\mu$m in the particle diameter, and then the mixing and consolidation were performed in a ball mill without solvents. The obtained powder for pressure-molding with the tapped bulk density of 0.79 g/cm$^3$ was pressure-molded in 90 Mpa, and sintered in the atmosphere at 1300°C for 3 hours.

The obtained black quartz glass had the density of 2.20 g/cm$^3$, the SCE reflectance of 5.2% or less, the brightness L* of 19.0 and the saturation a* of 2.2 and b* of 3.6 in L*a*b* color system, the specific heat at a temperature of 500°C of 1112 J/kg·K, the thermal diffusivity at a temperature of 500°C of 7.5 × 10$^{-7}$ m$^2$/s, the thermal conductivity at a temperature of 500°C of 1.83 W/mK, the thermal expansion coefficient at a temperature of 30 to 600°C of 7.6 × 10$^{-7}$ /°C, and the optical transmittance in the range of 200 to 3000 nm of 0.22% or less. The obtained black quartz glass has no color unevenness, and exhibits a sufficient black-based color that does not generate light transmission, stray light and light scattering, and was confirmed to be visually homogeneous and aesthetically excellent.

[Comparative Example 1]

To fumed silica was added with a Si powder of 0.5 mass%, wherein the fumed silica had the tapped bulk density of 0.06 g/cm$^3$, the BET specific surface area of 85 m$^2$/g, the OH group-concentration of 0.7 mass% and each content of metallic impurities other than Si of 1 ppm or less, the Si powder had $D_{50}$ of 7 μm, $D_{10}$ of 4 μm and $D_{95}$ of 11 μm in the particle diameter, and then the mixing and consolidation were performed in a ball mill without solvents. The powder for pressure-molding was pressure-molded in 90 Mpa, and sintered in the atmosphere at 1250°C for 3 hours.

The obtained black quartz glass had a small density of 2.09 g/cm$^3$, a large SCE reflectance of 13.0% or less, a large brightness L* of 36.2 and the saturation a* of 1.1 and b* of -1.7 in L*a*b* color system. Its color had unevenness, and it was insufficient for prevention of light transmission, stray light and light scattering.

[Table 1]

|  | Density g/cm$^3$ | SCE reflectance | L* | a* | b* |
|---|---|---|---|---|---|
| Example 1 | 2.20 | 5.3% or less | 20.6 | 1.9 | -0.6 |
| Example 2 | 2.19 | 7.6% or less | 25.2 | 2.6 | 3.3 |
| Example 3 | 2.20 | 5.3% or less | 18.2 | 3.2 | 2.1 |
| Example 4 | 2.20 | 5.2% or less | 19.0 | 2.2 | 3.6 |
| Comparative Example 1 | 2.09 | 13.0% or less | 36.2 | 1.1 | -1.7 |

[Table 2]

|  | Specific heat J/kg·K | Thermal diffusivity m$^2$/s | Thermal conductivity W/mK | Thermal expansion coefficient $\times 10^{-7}$ /°C | Optical transmittance % |
|---|---|---|---|---|---|
| Example 1 | 1103 | $7.5 \times 10^{-7}$ | 1.82 | 9.4 | 0.12 |
| Example 2 | 1108 | $7.5 \times 10^{-7}$ | 1.83 | 8.3 | 0.17 |
| Example 3 | 1105 | $7.5 \times 10^{-7}$ | 1.82 | 9.0 | 0.13 |
| Example 4 | 1112 | $7.5 \times 10^{-7}$ | 1.83 | 7.6 | 0.22 |

INDUSTRIAL APPLICABILITY

The present invention is useful in the field of black quartz glass. The present invention allows to economically and efficiently provide a large black quartz glass ingot having an excellent light-shielding property. The black quartz glass of the present invention is suitably used for the quartz glass cell for optical analysis and used for the light-shielding member or the infrared heat absorption/storage member for semiconductor manufacturing apparatuses or for infrared heating apparatuses.

**Claims**

1. A black quartz glass comprising Si of 0.5 to 10 mass%, SiO of 0.1 to 5 mass% and SiO$_2$ of the residue, wherein the SCE reflectance at a wavelength of 350 nm to 750 nm is 10% or less.

2. The black quartz glass according to claim 1, wherein the brightness L* is 30 or less, the absolute value of the saturation a* is 3.5 or less, and the absolute value of b* is 4 or less in L*a*b* color system.

3. The black quartz glass according to claim 1 or 2, wherein each content of metallic impurities other than Si element is 1 ppm or less.

4. The black quartz glass according to any one of claims 1 to 3, which satisfies any one or more of the following physical properties (a) to (f):

    (a) the density is 2.15 g/cm$^3$ or more and 2.3 g/cm$^3$ or less,

(b) the specific heat at a temperature of 500°C is 1090 J/kg·K or more and 1130 J/kg·K or less,
(c) the thermal diffusivity at a temperature of 500°C is $7 \times 10^{-7}$ m$^2$/s or more and $8 \times 10^{-7}$ m$^2$/s or less,
(d) the thermal conductivity at a temperature of 500°C is 1.5 W/mK or more and 2.1 W/mK or less,
(e) the thermal expansion coefficient in the range of 30°C to 600°C is $2 \times 10^{-7}$ /°C or more and $12 \times 10^{-7}$ /°C or less,
(f) the optical transmittance at a wavelength of 200 nm to 3000 nm with a thickness of 1 mm is 0.5% or less.

5. The black quartz glass according to any one of claims 1 to 4, wherein at least a part of Si contained in the quartz glass is particulate, and the particulate substance has $D_{50}$ of 5 to 10 $\mu$m, $D_{10}$ of 1 $\mu$m or more and $D_{95}$ of 30 $\mu$m or less in the particle diameter.

6. The black quartz glass according to any one of claims 1 to 5, wherein at least a part of SiO contained in the quartz glass is particulate, and the particulate substance has $D_{50}$ of 5 to 15 $\mu$m, $D_{10}$ of 1 $\mu$m or more and $D_{90}$ of 35 $\mu$m or less in the particle diameter.

7. The black quartz glass according to any one of claims 1 to 6, wherein

(a) the SiO$_2$ part is a sintered body of fumed silica; or
(b) the SiO$_2$ part is a sintered body comprising fumed silica of 30 to 60 mass% and a synthetic silica powder of the residue having $D_{50}$ of 60 to 100 $\mu$m, $D_{10}$ of 40 $\mu$m or more and $D_{95}$ of 180 $\mu$m or less in the particle diameter; or
(c) the SiO$_2$ part is a sintered body comprising fumed silica of 30 to 60 mass%, spherical silica of 5 to 25 mass% having $D_{50}$ of 5 to 15 $\mu$m, $D_{10}$ of 1 $\mu$m or more and $D_{95}$ of 70 $\mu$m or less, and a synthetic silica powder of the residue having $D_{50}$ of 60 to 100 $\mu$m, $D_{10}$ of 40 $\mu$m or more and $D_{95}$ of 180 $\mu$m or less in the particle diameter.

8. A method for producing black quartz glass, comprising:

(1) pressure-molding a powder obtained by mixing and consolidating fumed silica with a Si powder of 0.5 to 10 mass% and a SiO powder of 0.1 to 5 mass%, and heating the pressure-molded product in the atmosphere at a maximum temperature of 1200 to 1300°C and sintering the fumed silica to obtain the black quartz glass according to any one of claims 1 to 6 or the black quartz glass according to (a) of claim 7; or
(2) pressure-molding a powder obtained by mixing and consolidating fumed silica of 30 to 60 mass% and a synthetic silica powder of the residue having $D_{50}$ of 60 to 100 $\mu$m, $D_{10}$ of 40 $\mu$m or more and $D_{95}$ of 180 $\mu$m or less in the particle diameter, with a Si powder of 0.5 to 10 mass% and a SiO powder of 0.1 to 5 mass%, and heating and sintering the pressure-molded product in the atmosphere at a maximum temperature of 1250 to 1320°C to obtain the black quartz glass according to any one of claims 1 to 6 or the black quartz glass according to (b) of claim 7; or
(3) pressure-molding a powder obtained by mixing and consolidating fumed silica of 30 to 60 mass%, spherical silica of 5 to 25 mass% having $D_{50}$ of 5 to 15 $\mu$m, $D_{10}$ of 1 $\mu$m or more and $D_{95}$ of 70 $\mu$m or less, and a synthetic silica powder of the residue having $D_{50}$ of 60 to 100 $\mu$m, $D_{10}$ of 40 $\mu$m or more and $D_{95}$ of 180 $\mu$m or less in the particle diameter, with a Si powder of 0.5 to 10 mass% and a SiO powder of 0.1 to 5 mass%, and heating and sintering the pressure-molded product in the atmosphere at a maximum temperature of 1250 to 1320°C to obtain the black quartz glass according to any one of claims 1 to 6 or the black quartz glass according to (c) of claim 7.

9. The method for producing black quartz glass according to claim 8, wherein the fumed silica satisfies at least one of: the tapped bulk density is 0.03 to 0.08 g/cm$^3$, the BET specific surface area is 50 to 100 m$^2$/g, the OH group-concentration is 0.5 to 1.0 mass%, and each content of metallic impurities other than Si is 1 ppm or less.

10. The method for producing black quartz glass according to claim 8 or 9, wherein the Si powder has $D_{50}$ of 5 to 10 $\mu$m, $D_{10}$ of 1 $\mu$m or more and $D_{95}$ of 30 $\mu$m or less in the particle diameter, and the SiO powder has $D_{50}$ of 3 to 15 $\mu$m, $D_{10}$ of 1 $\mu$m or more and $D_{90}$ of 35 $\mu$m or less in the particle diameter.

11. The method for producing black quartz glass according to any one of claims 8 to 10, wherein the mixing and consolidation are performed so that the tapped bulk density of the powder obtained by the mixing and consolidation is 5 to 20 times the tapped bulk density of the fumed silica.

12. The method for producing black quartz glass according to any one of claims 8 to 11, wherein the heating and sintering time in the atmosphere is 0.5 to 5 hours.

13. A product comprising a black quartz glass member made of the black quartz glass according to any one of claims 1 to 7.

14. The product according to claim 13, wherein the black quartz glass member is an optical component, a light-shielding member or an infrared heat absorption/storage member.

15. The product according to claim 14, wherein the optical component is a spectroscopic cell, a reflector for projectors or a connector for optical fibers, and the light-shielding member is a light-shielding member for semiconductor manufacturing apparatuses or for infrared heating apparatuses.

**Patentansprüche**

1. Schwarzes Quarzglas, umfassend Si von 0,5 bis 10 Gew.-%, SiO von 0,1 bis 5 Gew.-% und $SiO_2$ für den Rest, wobei das SCE-Reflexionsvermögen bei einer Wellenlänge von 350 nm bis 750 nm 10 % oder weniger beträgt.

2. Schwarzes Quarzglas nach Anspruch 1, wobei in einem L*a*b*-Farbsystem die Helligkeit L* 30 oder weniger beträgt, der absolute Wert der Sättigung a* 3,5 oder weniger beträgt und der absolute Wert b* 4 oder weniger beträgt.

3. Schwarzes Quarzglas nach Anspruch 1 oder 2, wobei jeglicher Gehalt von metallischen Verunreinigungen mit Ausnahme des Si-Elements 1 ppm oder weniger beträgt.

4. Schwarzes Quarzglas nach einem der Ansprüche 1 bis 3, das noch eine oder mehrere der folgenden physikalischen Eigenschaften (a) bis (f) erfüllt:

   (a) die Dichte beträgt 2,15 $g/cm^3$ oder mehr und 2,3 $g/cm^3$ oder weniger,
   (b) die spezifische Wärme bei einer Temperatur von 500 °C beträgt 1090 J/kg·K oder mehr und 1130 J/kg·K oder weniger,
   (c) die thermische Diffusivität bei einer Temperatur von 500 °C beträgt 7 x $10^{-7}$ $m^2/s$ oder mehr und 8 x $10^{-7}$ $m^2/s$ oder weniger,
   (d) die thermische Leitfähigkeit bei einer Temperatur von 500 °C beträgt 1,5 W/mK oder mehr und 2,1 W/mK oder weniger,
   (e) der thermische Expansionskoeffizient im Bereich von 30 °C bis 600 °C beträgt 2 x $10^{-7}$ /°C oder mehr und 12 x $10^{-7}$ /°C oder weniger,
   (f) die optische Transmission bei einer Wellenlänge von 200 nm bis 3000 nm mit einer Dicke von 1 mm beträgt 0,5 % oder weniger.

5. Schwarzes Quarzglas nach einem der Ansprüche 1 bis 4, wobei mindestens ein Teil des im Quarzglas enthaltenen Si teilchenförmig ist, und die teilchenförmige Substanz $D_{50}$ mit 5 bis 10 $\mu$m, $D_{10}$ mit 1 $\mu$m oder mehr und $D_{95}$ mit 30 $\mu$m oder weniger im Teilchendurchmesser aufweist.

6. Schwarzes Quarzglas nach einem der Ansprüche 1 bis 5, wobei mindestens ein Teil des im Quarzglas enthaltenen SiO teilchenförmig ist, und die teilchenförmige Substanz $D_{50}$ von 5 bis 15 $\mu$m, $D_{10}$ von 1 $\mu$m oder mehr und $D_{90}$ von 35 $\mu$m oder weniger im Teilchendurchmesser aufweist.

7. Schwarzes Quarzglas nach einem der Ansprüche 1 bis 6, wobei

   (a) der $SiO_2$-Teil ein gesinterter Körper aus pyrogenem Siliciumdioxid ist; oder
   (b) der $SiO_2$-Teil ein gesinterter Körper ist, umfassend: pyrogenes Siliciumdioxid von 30 bis 60 Gew.-% und ein synthetisches Siliciumdioxidpulver für den Rest, das $D_{50}$ von 60 bis 100 $\mu$m, $D_{10}$ von 40 $\mu$m oder mehr und $D_{95}$ von 180 $\mu$m oder weniger im Teilchendurchmesser aufweist; oder
   (c) der $SiO_2$-Teil ein gesinterter Körper ist, umfassend: pyrogenes Siliciumdioxid von 30 bis 60 Gew.-%, sphärisches Siliciumdioxid von 5 bis 25 Gew.-%, das $D_{50}$ von 5 bis 15 $\mu$m, $D_{10}$ von 1 $\mu$m oder mehr und $D_{95}$ von 70 $\mu$m oder weniger und ein synthetisches Siliciumdioxidpulver für den Rest, das $D_{50}$ von 60 bis 100 $\mu$m, $D_{10}$ von 40 $\mu$m oder mehr und $D_{95}$ von 180 $\mu$m oder weniger im Teilchendurchmesser aufweist.

8. Verfahren zum Herstellen von schwarzem Quarzglas, umfassend:

   (1) Druckformen eines Pulvers, das erhalten wird durch Mischen und Konsolidieren von pyrogenem Siliciumdioxid mit einem Si-Pulver von 0,5 bis 10 Gew.-% und einem SiO-Pulver von 0,1 bis 5 Gew.-% und Erwärmen des druckgeformten Produkts in der Atmosphäre bei einer Höchsttemperatur von 1200 bis 1300 °C und Sintern des pyrogenen Siliciumdioxids, um das schwarze Quarzglas nach einem der Ansprüche 1 bis 6 oder das schwarze Quarzglas nach (a) von Anspruch 7 zu erhalten; oder

(2) Druckformen eines Pulvers, das erhalten wird durch Mischen und Konsolidieren von pyrogenem Siliciumdioxid von 30 bis 60 Gew.-% und einem synthetischen Siliciumdioxidpulver für den Rest, das $D_{50}$ von 60 bis 100 $\mu$m, $D_{10}$ von 40 $\mu$m oder mehr und $D_{95}$ von 180 $\mu$m oder weniger im Teilchendurchmesser aufweist, mit einem Si-Pulver von 0,5 bis 10 Gew.-% und einem SiO-Pulver von 0,1 bis 5 Gew.-% und Erwärmen und Sintern des druckgeformten Produkts in der Atmosphäre bei einer Höchsttemperatur von 1250 bis 1320 °C, um das schwarze Quarzglas nach einem der Ansprüche 1 bis 6 oder das schwarze Quarzglas nach (b) von Anspruch 7 zu erhalten; oder

(3) Druckformen eines Pulvers, das erhalten wird durch Mischen und Konsolidieren von pyrogenem Siliciumdioxid von 30 bis 60 Gew.-%, sphärischem Siliciumdioxid von 5 bis 25 Gew.-%, das $D_{50}$ von 5 bis 15 $\mu$m, $D_{10}$ von 1 $\mu$m oder mehr und $D_{95}$ von 70 $\mu$m oder weniger aufweist, und einem synthetischen Siliciumdioxidpulver für den Rest, das $D_{50}$ von 60 bis 100 $\mu$m, $D_{10}$ von 40 $\mu$m oder mehr und $D_{95}$ von 180 $\mu$m oder weniger im Teilchendurchmesser aufweist, mit einem Si-Pulver von 0,5 bis 10 Gew.- % und einem SiO-Pulver von 0,1 bis 5 Gew.-% und Erwärmen und Sintern des druckgeformten Produkts in der Atmosphäre bei einer Höchsttemperatur von 1250 bis 1320 °C, um das schwarze Quarzglas nach einem der Ansprüche 1 bis 6 oder das schwarze Quarzglas nach (c) von Anspruch 7 zu erhalten.

9. Verfahren zum Herstellen von schwarzem Quarzglas nach Anspruch 8, wobei das pyrogene Siliciumdioxid mindestens eines aus Folgendem erfüllt: die gerüttelte Schüttdichte beträgt 0,03 bis 0,08 g/cm$^3$, der spezifische BET-Oberflächenbereich beträgt 50 bis 100 m$^2$/g, die OH-Gruppen-Konzentration beträgt 0,5 bis 1,0 Gew.-% und jeglicher Gehalt von metallischen Unreinheiten mit Ausnahme von Si beträgt 1 ppm oder weniger.

10. Verfahren zum Herstellen von schwarzem Quarzglas nach Anspruch 8 oder 9, wobei das Si-Pulver $D_{50}$ von 5 bis 10 $\mu$m, $D_{10}$ von 1 $\mu$m oder mehr und $D_{95}$ von 30 $\mu$m oder weniger im Teilchendurchmesser aufweist, und das SiO-Pulver $D_{50}$ von 3 bis 15 $\mu$m, $D_{10}$ von 1 $\mu$m oder mehr und $D_{90}$ von 35 $\mu$m oder weniger im Teilchendurchmesser aufweist.

11. Verfahren zum Herstellen von schwarzem Quarzglas nach einem der Ansprüche 8 bis 10, wobei das Mischen und Konsolidieren so durchgeführt werden, dass die gerüttelte Schüttdichte des Pulvers, das durch das Mischen und Konsolidieren erhalten wird, 5 bis 20 mal die gerüttelte Schüttdichte des pyrogenen Siliciumdioxids beträgt.

12. Verfahren zum Herstellen von schwarzem Quarzglas nach einem der Ansprüche 8 bis 11, wobei die Erwärmungs- und Sinterzeit in der Atmosphäre 0,5 bis 5 Stunden beträgt.

13. Produkt, umfassend ein Element aus schwarzem Quarzglas, das aus dem schwarzen Quarzglas nach einem der Ansprüche 1 bis 7 gemacht ist.

14. Produkt nach Anspruch 13, wobei das Element aus schwarzem Quarzglas eine optische Komponente, ein Lichtabschirmungselement oder ein Element zur Absorption/Speicherung von Infrarotwärme ist.

15. Produkt nach Anspruch 14, wobei die optische Komponente eine spektroskopische Zelle, ein Reflektor für Projektoren oder ein Verbinder für optische Fasern ist, und das Lichtabschirmungselement ein Lichtabschirmungselement für Einrichtungen, die Halbleiter fertigen, oder für Einrichtungen zur Infraroterwärmung ist.

**Revendications**

1. Verre de quartz noir comprenant de la Si de 0,5 à 10 % en masse, du SiO de 0,1 à 5 % en masse et du SiO$_2$ du résidu, dans lequel la réflectance SCE à une longueur d'onde de 350 nm à 750 nm est inférieure ou égale à 10 %.

2. Verre de quartz noir selon la revendication 1, dans lequel la luminosité L* est inférieure ou égale à 30, la valeur absolue de la saturation a* est inférieure ou égale à 3,5 et la valeur absolue de b* est inférieure ou égale à 4 dans le système de couleurs L*a*b*.

3. Verre de quartz noir selon la revendication 1 ou 2, dans lequel chaque teneur en impuretés métalliques autres que l'élément Si est inférieure ou égale à 1 ppm.

4. Verre de quartz noir selon l'une quelconque des revendications 1 à 3, qui satisfait à l'une ou plusieurs des propriétés physiques suivantes (a) à (f) :

(a) la densité est supérieure ou égale à 2,15 g/cm$^3$ et inférieure ou égale à 2,3 g/cm$^3$,
(b) la chaleur spécifique à une température de 500°C est égale ou supérieure à 1090 J/kg·K et inférieure ou égale à 1130 J/kg·K,
(c) la diffusivité thermique à une température de 500°C est supérieure ou égale à 7 x 10$^{-7}$ m$^2$/s et inférieure ou égale à 8 x 10$^{-7}$ m$^2$/s,
(d) la conductivité thermique à une température de 500°C est supérieure ou égale à 1,5 W/mK et inférieure ou égale à 2,1 W/mK,
(e) le coefficient de dilatation thermique entre 30°C et 600°C est supérieur ou égal à 2 x 10$^{-7}$ /°C et inférieur ou égal à 12 x 10$^{-7}$ /°C,
(f) la transmittance optique à une longueur d'onde comprise entre 200 nm et 3000 nm avec une épaisseur de 1 mm est inférieure ou égale à 0,5 %.

5. Verre de quartz noir selon l'une quelconque des revendications 1 à 4, dans lequel au moins une partie de la Si contenu dans le verre de quartz est particulaire, et la substance particulaire a un diamètre de particule $D_{50}$ de 5 à 10 $\mu$m, $D_{10}$ de 1 $\mu$m ou plus et $D_{95}$ de 30 $\mu$m ou moins.

6. Verre de quartz noir selon l'une quelconque des revendications 1 à 5, dans lequel au moins une partie du SiO contenu dans le verre de quartz est particulaire, et la substance particulaire a un diamètre de particule $D_{50}$ de 5 à 15 $\mu$m, $D_{10}$ de 1 $\mu$m ou plus et $D_{90}$ de 35 $\mu$m ou moins.

7. Verre de quartz noir selon l'une quelconque des revendications 1 à 6, dans lequel

(a) la partie du SiO$_2$ est un corps fritté de silice pyrogénée ; ou
(b) la partie du SiO$_2$ est un corps fritté comprenant de la silice pyrogénée de 30 à 60 % en masse et une poudre de silice synthétique du résidu ayant un diamètre de particule $D_{50}$ de 60 à 100 $\mu$m, $D_{10}$ de 40 $\mu$m ou plus et $D_{95}$ de 180 $\mu$m ou moins ; ou
(c) la partie du SiO$_2$ est un corps fritté comprenant de la silice pyrogénée de 30 à 60 % en masse, de la silice sphérique de 5 à 25 % en masse ayant un $D_{50}$ de 5 à 15 $\mu$m, un $D_{10}$ de 1 $\mu$m ou plus et un $D_{95}$ de 70 $\mu$m ou moins, et une poudre de silice synthétique du résidu ayant un $D_{50}$ de 60 à 100 $\mu$m, un $D_{10}$ de 40 $\mu$m ou plus et un $D_{95}$ de 180 $\mu$m ou moins en ce qui concerne le diamètre de la particule.

8. Procédé de production de verre de quartz noir, comprenant :

(1) moulage sous pression d'une poudre obtenue en mélangeant et en consolidant de la silice pyrogénée avec une poudre de Si de 0,5 à 10 % en masse et une poudre de SiO de 0,1 à 5 % en masse, et chauffage du produit moulé sous pression dans l'atmosphère à une température maximale de 1200 à 1300°C et frittage de la silice pyrogénée afin d'obtenir le verre de quartz noir selon l'une quelconque des revendications 1 à 6 ou le verre de quartz noir selon le point (a) de la revendication 7 ;
ou
(2) moulage sous pression d'une poudre obtenue en mélangeant et en consolidant de la silice pyrogénée de 30 à 60 % en masse et une poudre de silice synthétique du résidu ayant un diamètre de particule $D_{50}$ de 60 à 100 $\mu$m, $D_{10}$ de 40 $\mu$m ou plus et $D_{95}$ de 180 $\mu$m ou moins, avec une poudre de Si de 0,5 à 10 % en masse et une poudre de SiO de 0,1 à 5 % en masse et chauffage et frittage du produit moulé sous pression dans l'atmosphère à une température maximale de 1250 à 1320°C afin d'obtenir le verre de quartz noir selon l'une quelconque des revendications 1 à 6 ou le verre de quartz noir selon (b) de la revendication 7 ; ou
(3) moulage sous pression d'une poudre obtenue en mélangeant et en consolidant de la silice pyrogénée de 30 à 60 % en masse, de la silice sphérique de 5 à 25 % en masse ayant un $D_{50}$ de 5 à 15 $\mu$m, un $D_{10}$ de 1 $\mu$m ou plus et un $D_{95}$ de 70 $\mu$m ou moins, et une poudre de silice synthétique du résidu ayant un $D_{50}$ de 60 à 100 $\mu$m, un $D_{10}$ de 40 $\mu$m ou plus et un $D_{95}$ de 180 $\mu$m ou moins dans le diamètre des particules, avec une poudre de Si de 0,5 à 10 % en masse et une poudre de SiO de 0,1 à 5 % en masse, et chauffage et frittage du produit moulé sous pression dans une atmosphère à une température maximale de 1250 à 1320 °C afin d'obtenir le verre de quartz noir selon l'une quelconque des revendications 1 à 6 ou le verre de quartz noir selon (c) de la revendication 7.

9. Procédé de production de verre de quartz noir selon la revendication 8, dans lequel la silice pyrogénée répond à au moins un des critères suivants : la densité apparente est de 0,03 à 0,08 g/cm$^3$, la surface spécifique BET est de 50 à 100m$^2$/g, la concentration du groupe OH est de 0,5 à 1,0 % en masse, et chaque teneur en impuretés métalliques autres que Si est inférieure ou égale à 1 ppm.

10. Procédé de production de verre de quartz noir selon la revendication 8 ou 9, dans lequel la poudre de Si a un $D_{50}$ de 5 à 10 $\mu$m, un $D_{10}$ de 1 $\mu$m ou plus et un $D_{95}$ de 30 $\mu$m ou moins dans le diamètre des particules, et la poudre de SiO a un $D_{50}$ de 3 à 15 $\mu$m, un $D_{10}$ de 1 $\mu$m ou plus et un $D_{90}$ de 35 $\mu$m ou moins dans le diamètre des particules.

11. Procédé de production de verre de quartz noir selon l'une quelconque des revendications 8 à 10, dans lequel le mélange et la consolidation sont effectués de manière à ce que la densité apparente de la poudre obtenue par le mélange et la consolidation soit de 5 à 20 fois la densité apparente de la silice pyrogénée.

12. Procédé de production de verre de quartz noir selon l'une quelconque des revendications 8 à 11, dans lequel le temps de chauffage et de frittage dans l'atmosphère est compris entre 0,5 et 5 heures.

13. Produit comprenant un élément en verre de quartz noir fabriqué à partir du verre de quartz noir selon l'une quelconque des revendications 1 à 7.

14. Produit selon la revendication 13, dans lequel l'élément en verre de quartz noir est un composant optique, un élément de protection contre la lumière ou un élément d'absorption/de stockage de la chaleur infrarouge.

15. Produit selon la revendication 14, dans lequel le composant optique est une cellule spectroscopique, un réflecteur pour projecteurs ou un connecteur pour fibres optiques, et l'élément de protection contre la lumière est un élément de protection contre la lumière pour les appareils de fabrication de semi-conducteurs ou pour les appareils de chauffage à infrarouge.

**REFERENCES CITED IN THE DESCRIPTION**

**Patent documents cited in the description**

- JP 2020166634 A
- JP 2021146783 A
- JP 2014094864 A

- JP 2013001628 A
- JP 2020073440 A
- JP 2003146676 A